# EUROPEAN PATENT APPLICATION

(11) **EP 2 843 920 A1**
(43) Date of publication of application: **04.03.2015**
(21) Application number: 14186450.4
(22) Date of filing: 30.11.1999
(51) Int. Cl.: H04M 1/725

(54) **Method and apparatus for displaying background image in mobile telephone**

(30) Priority: 17.12.1998 KR 19980055886
(62) Divisional of application: 99123781.9
(71) Applicant: Samsung Electronics Co., Ltd, Gyeonggi-do 443-742 (KR)
(72) Inventor: Yoon, Woo-Sun, 443-742 Gyeonggi-do (KR); Kim, Hoo-Ja, Seoul (KR)
(74) Representative: Jenkins, Richard Gavin

(57) **Abstract**

A method for displaying a background image in a mobile telephone which downloads background images from a computer, stores the downloaded background images in a memory, and displays a selected one of the stored background images. The method comprises displaying the selected background image for a predetermined time, in a background image display request condition; determining whether an urgent character message display condition has occurred while the background image is displayed; upon detection of the urgent character message display condition, stop displaying the background image and displaying the urgent character message; and upon detection of a normal character message display condition, continuing to display the background image, and after expiration of a predetermined time, displaying the normal character message.

## Description

### Field of the Invention

The present invention relates generally to a mobile communication terminal, and in particular, to a method and an apparatus for displaying a background image in a mobile telephone.

### Background of the Invention

With the increased popularization of the mobile telephone, there are demands for various convenient functions. For example, the mobile telephone has a phone book function, a short message service (SMS) function and a biorhythm service function, to increase utility.

In addition, when necessary, the user can form a background image on a display window of the mobile telephone so that the user can see the background image when the display window is backlit. Conventionally, the background image is formed by sticking a transparent-sticker type photograph to an LCD- (Liquid Crystal Display-) surface of the display window, which is very annoying and may damage the LCD. Furthermore, a background image portion having a higher strength, if any, may make a character message on the display window invisible.

It is, therefore, the object of the present invention to provide an improved method for providing a background image in a mobile telephone.

This object is solved by the method as claimed in independent claim 1 and the apparatus as claimed in independent claim 8. Preferred embodiments of the invention are subject-matters of dependent claims.

The invention provides methods of downloading background images from a computer and displaying a selected one of the downloaded background images on a display in a mobile telephone.

In accordance with one aspect, the present invention provides a method of displaying a background image in a mobile telephone. The method comprises downloading background images from a computer and storing the downloaded background images in a memory; upon receipt of a background image select request, displaying in sequence the stored background images; and setting, when one of the background images is selected, the selected background image as a background image to be displayed.

In accordance with another aspect, the present invention provides a method for displaying a background image in a mobile telephone which downloads background images from a computer, stores the downloaded background images in a memory, and displays a selected one of the stored background images. The method comprises displaying the selected background image for a predetermined time, in a background image display request condition; determining whether an urgent character message display condition has occurred while the background image is displayed; upon detection of the urgent character message display condition, stop displaying the background image and displaying the urgent character message; and upon detection of a normal character message display condition, continuing to display the background image, and after expiration of a predetermined time, displaying the normal character message.

### Brief Description of the Drawings

The above and other objects, features and advantages of the present invention will become more apparent from the following detailed description when taken in conjunction with the accompanying drawings in which:
Fig. 1 is a block diagram illustrating the connection between a mobile telephone and a computer, for explaining how the mobile telephone downloads background images from the computer according to an embodiment of the present invention;
Fig. 2 is a flow chart illustrating a procedure for setting a background image to be displayed according to an embodiment of the present invention; and
Fig. 3 is a flow chart illustrating a procedure for displaying a set background image according to an embodiment of the present invention.

### Detailed Description of the Preferred Embodiment

A preferred embodiment of the present invention will be described herein below with reference to the accompanying drawings. In the following description, well-known functions or constructions are not described in detail since they would obscure the invention in unnecessary detail.

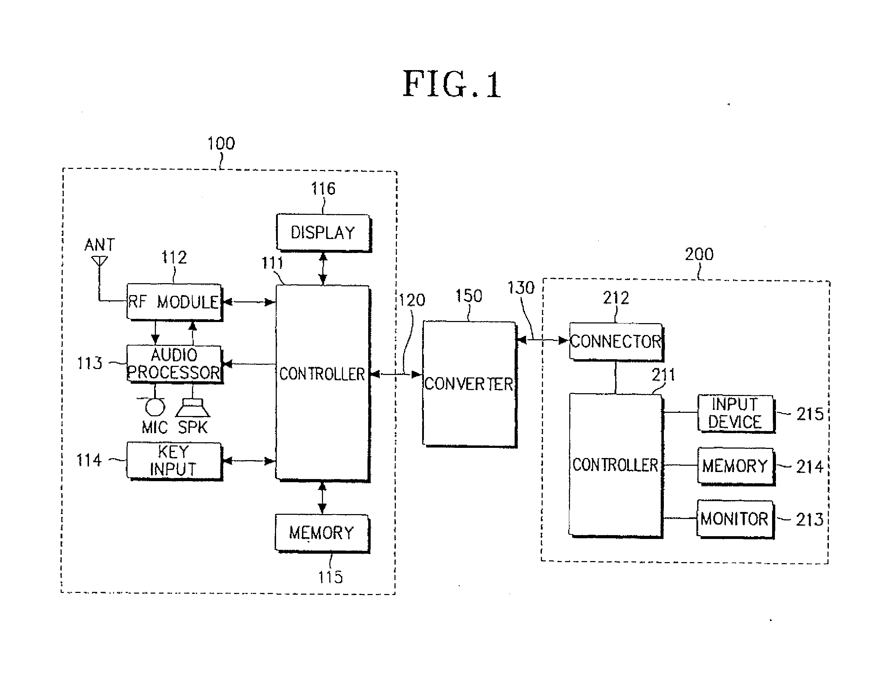

In an exemplary embodiment of the present invention, a mobile telephone downloads background images from a computer and displays a selected one of the background images on the display. To this end, the user can store image files of desired paintings and photographs in a memory of the computer using a scanner. The stored image files are downloaded to the mobile telephone by the connection shown in Fig. 1.

Fig. 1 shows the connection between the mobile telephone and the computer, for explaining how to download the background image files from the computer to the mobile telephone according to an embodiment of the present invention. In Fig. 1, reference numeral 100 represents the mobile telephone and reference numeral 200 represents the computer. The mobile telephone is connected to the computer 200 through a converter 150 interposed in between.

With regard to the structure of the mobile telephone 100, a controller 111 controls the overall operation of the mobile telephone 100 and particularly controls display of a background image according to the present invention. An RF- (Radio Frequency-) module 112 controls transmission and reception of audio data and control data. An audio processor 113, under the control of the controller 111, converts the audio data received from the RF-module 112 to an audible sound through a speaker SPK, and converts an audio signal received from a microphone MIC to audio data, which is provided to the RF-module 112. A key input device 114 including a plurality of numeric keys and function keys, generates key data according to the user's key operation and provides the generated key data to the controller 111. A memory 115 includes a program memory for storing program data required in controlling operation of the mobile telephone, a data memory for storing data generated during operation of the mobile telephone, and a flash memory for storing background image files downloaded from the computer 200 according to an embodiment of the present invention. Preferably, the flash memory has a capacity of 1 to 4 Mbits. For example, a 4-Mbit flash memory can store about 36 background image files. A display 116, under the control of the controller 111, displays various messages and particularly displays a background image downloaded from the computer 200 according to an embodiment of the present invention. It is preferable to use a color LCD for the display 116 to display a color background image. The controller 111 is connected to the converter 150 through an IIC-BUS 120.

With regard to the structure of the computer 200, a controller 211 controls the overall operation of the computer 200 and particularly provides background images to the mobile telephone 100 according to the present invention. A connector 212 outputs data received from the controller 211 to the converter 150 and outputs data received from the converter 150 to the controller 211. A monitor 213 displays operation of the computer 200 in image and text, under the control of the controller 211. A memory 214 includes a program memory for storing a control program of the computer 200, a data memory and an auxiliary memory (e.g., hard disk drive). An input device 215 including a keyboard and a mouse, generates input signals according to the user's operation and provides the generated input signals to the controller 211.

The converter 150 interposed between the mobile telephone 100 and the computer 200, converts data (including the background image files) output from the computer 200 and transmits the converted data to the mobile telephone 100; and converts data output from the mobile telephone 100 and transmits the converted data to the computer 200. The converter 150 is connected to the connector 212 in the computer 200 via a UART- (Universal Asynchronous Receiver/Transmitter-) BUS 130.

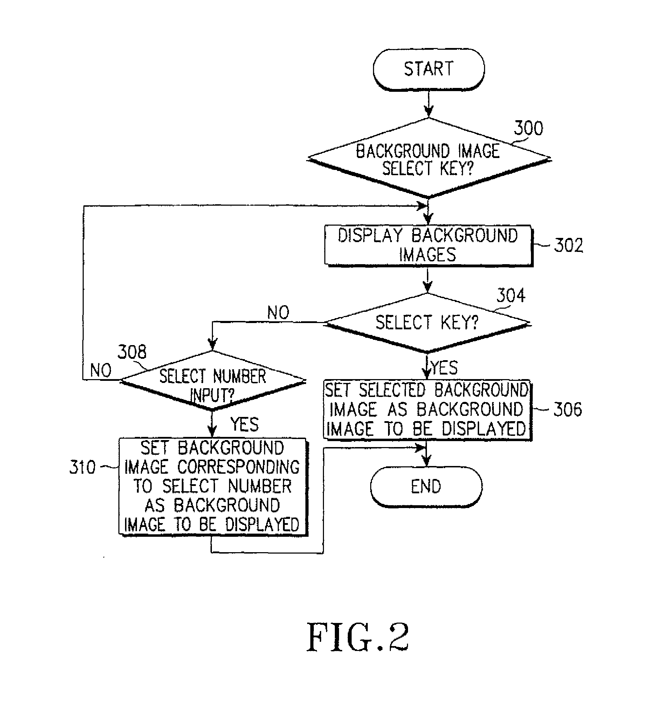

When the background image files are downloaded from the computer 200 to the mobile telephone 100, the controller 111 stores the downloaded image files in the flash memory of the memory 115. Thereafter, upon receipt of a background image select request from the user, the controller 111 sets a background image to be displayed by performing the procedure of Fig. 2.

Referring to Fig. 2, the controller 111 of the mobile telephone 100 determines in step 300 whether or not a background image select request key is input by the user. Upon detection of the background image select request key input, the controller 111 reads in sequence the background image files from the flash memory of the memory 115 and displays, in step 302, on the display 116 the read background images together with their associated select numbers for a predetermined time. While displaying the background images, the controller 111 determines in step 304 whether or not a select key is input by the user. Upon detection of the select key, the controller 111 sets, in step 306, the selected background image as a background image to be displayed and stores the selected background image file in the flash memory of the memory 115. Upon failure to detect the select key in step 304, the controller 111 determines in step 308 whether or not a select number is input by the user. Upon detection of the select number, the controller 111 sets, in step 310, the background image corresponding to the select number as a background image to be displayed and stores the selected background image file in the flash memory of the memory 115.

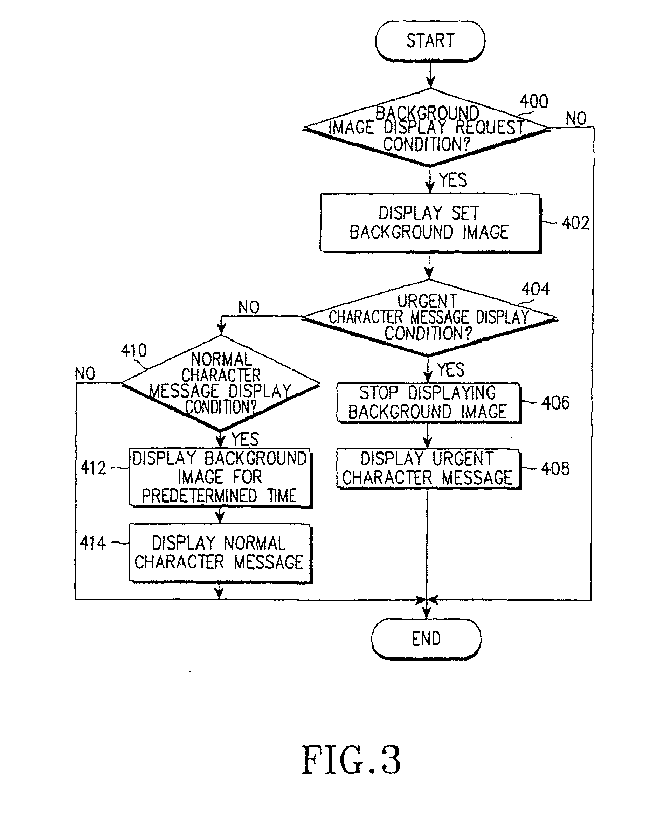

After setting the background image, the controller 111 displays the set background image on the display 116 in accordance with the control procedure of Fig. 3.

Referring to Fig. 3, the controller 111 of the mobile telephone 100 determines in step 400 whether a background image display request condition has occurred or not. Upon detection of the background image display request condition, the controller 111 displays, in step 402, on the display 116 the background image set by the procedure of Fig. 2 for a predetermined time. For example, the background image display request condition occurs when the user presses a background image display request key, opens a flap of the mobile telephone to make a call or turns on the mobile telephone, or when a short message is received.

While the background image is displayed, the controller 111 determines in step 404 whether an urgent character message display condition has occurred or not. When there is an urgent character message to be displayed immediately, the controller 111 stops displaying the background image in step 406, and displays the urgent character message on the display 116 in step 408. For example, the urgent character message display condition occurs when the user inputs (or presses) a function key, a numeric key or a display end request key while the background image is displayed after the flap is opened.

Further, while the background image is displayed, the controller 111 determines in step 410 whether a normal character message display condition has occurred or not. When there is a character message to be displayed normally, the controller 111 displays, in step 412, the present background image until expiration of the predetermined time. Thereafter, in step 414, the controller 111 displays the normal character message on the display 116 in step 414. For example, the normal character message refers to initial character messages which are displayed upon power on. In addition, the normal character message refers to a received short message.

The background image display request condition of step 400 can be selected from a plurality of predetermined background image display request conditions. Similarly, the urgent character message display condition of step 404 and the normal character message display condition of step 410 can also be selected from predetermined urgent character message display conditions and predetermined normal message display conditions, respectively.

As described above, the novel mobile telephone downloads background image files from the computer, and selectively displays a desired background image on the display.

It will be appreciated that one aspect of the invention provides a method of providing a background image in a mobile telephone (100), comprising:
downloading background image data from a data source (200);
storing the downloaded background image data in a memory (115); and setting (306) a background image selected from the background image data as a background image to be displayed.

In certain embodiments, the method further comprises: upon receiving (300) a background image select request, displaying (302) in sequence a plurality of background images from the background image data.

In certain embodiments, the step of displaying (302) comprises:
displaying the background images together with associated select numbers; and
the step of setting (306) comprises:
upon detecting (308) one of the select numbers, setting (310) the background image to be displayed corresponding to the detected select number.

In certain embodiments, the method further comprises:
displaying (402, 412) the set background image.

In certain embodiments, the set background image is displayed for a predetermined time.

In certain embodiments, the method further comprises:
displaying (402) the set background image in a background image display request condition;
determining (404) whether an urgent character message display condition has occurred while the background image is displayed;
upon detecting (404:YES) of the urgent character message display condition, stopping (406) to display the set background image and displaying (408) the urgent character message; and
upon detecting (410:YES) a normal character message display condition, continuing (412) to display the set background image.

In certain embodiments, the method further comprises:
after a lapse of a predetermined time, displaying (414) a normal character message.

In certain embodiments, the normal character message comprises an initial character message which is displayed upon power-on or a received short message.

In certain embodiments, the urgent character message display condition occurs when the user inputs a function key (114), a numeric key (114) or a display end request key (114) while the background image is displayed after a flap of the mobile telephone (100) is opened.

Another aspect of the invention provides apparatus for providing a background image in a mobile telephone (100), comprising:
means (111) for downloading background image data from a data source (200);
memory (115) for storing the downloaded background image data; and means (111, 114) setting a background image selected from the background image data as a background image to be displayed.

## Claims

1. A method of providing a background image for a mobile telephone (100), comprising:
downloading a plurality of images from a computing device (200);
storing the plurality of images in a memory (115);
displaying (302) in sequence the plurality of images according to a user input; and
setting an image which is displayed when a user input is received while the plurality of images are displayed as a background image, and storing the image as the background image in the memory.

2. The method as claimed in claim 1, further comprising:
displaying (402, 412) the image as a background image.

3. The method as claimed in claim 2 wherein the set background image is displayed for a predetermined time.

4. The method as claimed in one of claims 1 to 3, further comprising:
displaying (402) the set background image in a background image display request condition;
determining (404) whether an urgent character message display condition has occurred while the background image is displayed;
upon detecting (404:YES) of the urgent character message display condition, stopping (406) to display the set background image and displaying (408) the urgent character message; and
upon detecting (410:YES) a normal character message display condition, continuing (412) to display the set background image.

5. The method as claimed in claim 4, further comprising:
after a lapse of a predetermined time, displaying (414) a normal character message.

6. The method as claimed in claim 5 wherein the normal character message comprises an initial character message which is displayed upon power-on or a received short message.

7. The method as claimed in one of claims 4 to 6 wherein the urgent character message display condition occurs when the user inputs a function key (114), a numeric key (114) or a display end request key (114) while the background image is displayed after a flap of the mobile telephone (100) is opened.

8. An apparatus for providing a background image for a mobile telephone (100), comprising:
a controller(111) configured to download a plurality of images from a computing device, to store the plurality of images in memory(115), to display in sequence the plurality of images according to a user input, and to set an image which is displayed when a user input is received while the plurality of images are displayed as a background image, and storing the image as the background image in the memory.
